# EUROPEAN PATENT APPLICATION

(11) **EP 2 541 852 A1**
(43) Date of publication of application: **02.01.2013**
(21) Application number: 11774286.6
(22) Date of filing: 27.01.2011
(51) Int. Cl.: H04L 12/56

(54) **METHOD AND DEVICE FOR CONVERGING LAYER 2 MULTICAST NETWORK**

(30) Priority: 29.04.2010 CN 201010161816
(71) Applicant: Huawei Technologies Co., Ltd., Shenzhen, Guangdong 518129 (CN)
(72) Inventor: DING, Hancheng, Shenzhen Guangdong 518129 (CN); LI, Wentao, Shenzhen Guangdong 518129 (CN)
(74) Representative: Pfenning, Meinig & Partner GbR
(86) International application number: PCT/CN2011/070680
(87) International publication number: WO 2011/134295

(57) **Abstract**

The present invention discloses a method and a device for converging a layer 2 multicast network, and pertains to the communication field. The method includes: if a device in a layer 2 multicast network detects that a topology of the layer 2 multicast network changes, by the device: receiving a query command sent by an upstream device, and multicasting the query command to a downstream device; generating a query response according to a layer 2 multicast forwarding table of the device, where the query response carries channel information requested by a user; receiving a query response sent by the downstream device, and storing the channel information requested by the user carried by the received query response and a forwarding port receiving the received query response into the layer 2 multicast forwarding table; and sending the generated query response and the received query response to the upstream device. The device includes: a receiving module, a first generating module, a storing module, and a sending module. With the present invention, the convergence of the layer 2 multicast network can be faster when the topology of the layer 2 multicast network changes.

## Description

This application claims priority to Chinese Patent Application No. 201010161816.4, filed with the Chinese Patent Office on April 29, 2010 and entitled "METHOD AND DEVICE FOR CONVERGING LAYER 2 MULTICAST NETWORK", which is incorporated herein by reference in its entirety.

### FIELD OF THE INVENTION

The present invention relates to the communication field, and in particular, to a method and a device for converging a layer 2 multicast network.

### BACKGROUND OF THE INVENTION

A layer 2 multicast network is an access layer network arranged between a layer 3 network and a user host. The user host is attached to the layer 2 multicast network, and communicates with the layer 3 network through the layer 2 multicast network. The user host may request a channel by sending a play request.

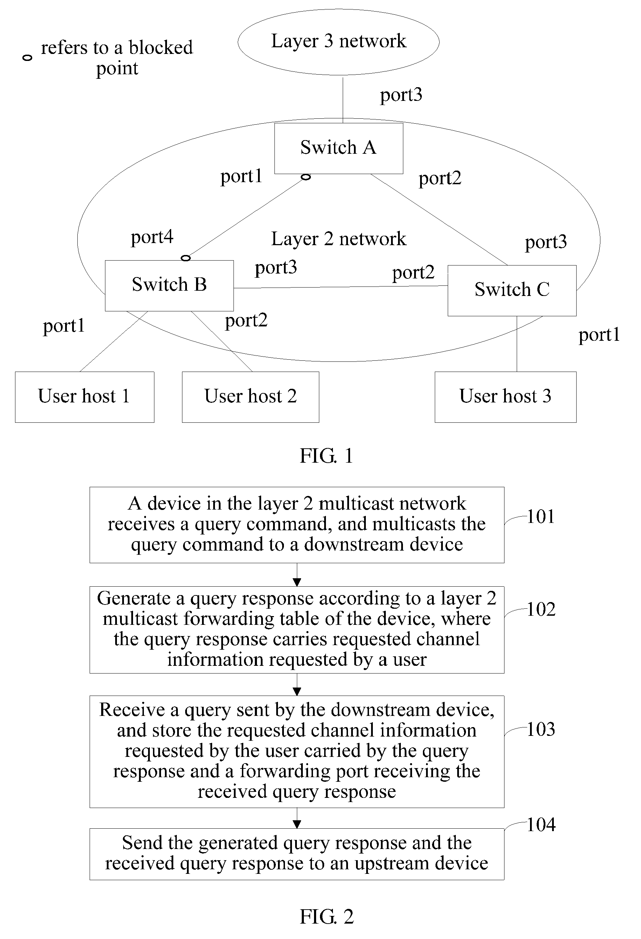

For example, in a network architecture shown in FIG. 1, the layer 2 multicast network includes switches A, B, and C, the link between the switch A and the switch B is blocked, while the link between the switch A and the switch C and the link between the switch B and the switch C are in conduction; a user host 1 and a user host 2 are attached to the switch B, and a user host 3 is attached to the switch C. If the user host 3 requests a channel, the user host 3 multicasts a play request to the layer 2 multicast network, where the play request carries requested channel information; after receiving the play request, the switch C stores a forwarding port port1 receiving the play request and the carried channel information into a layer 2 multicast forwarding table of the switch C, and multicasts the play request to an upstream device through a router port port3; the switch A receives the play request, and stores a forwarding port receiving the play request, port2, and the carried channel information into a layer 2 multicast forwarding table of the switch A, and multicasts the play request to a layer 3 network through a router port port3; after receiving the play request, the layer 3 network sends a data packet corresponding to the channel information to the layer 2 multicast network; after receiving the data packet, the switch A searches the layer 2 multicast forwarding table for a forwarding port port2 corresponding to the channel information, and forwards the data packet through the port2; when receiving the data packet, the switch C searches the layer 2 multicast forwarding table for a forwarding port port1 corresponding to the channel information, finds the forwarding port port1, and forwards the data packet to the user host 3 through the port1. The user host 1 and user host 2 request desired channels respectively by using a same method.

In the layer 2 multicast forwarding table of a switch, each corresponding relation can survive for only a period of time. Therefore, the layer 3 network multicasts a query command to the layer 2 multicast network periodically, and the layer 2 multicast network multicasts the query command to all user hosts; after the user hosts receive the query command, they select a time point at random within a preset time range respectively to multicast a query response to the layer 2 multicast network, where the query response carries channel information that each user host requests; after each device in the layer 2 multicast network receives the query response, each device re-stores the forwarding port receiving the query response and channel information carried by the query response into the layer 2 multicast forwarding table. In this way, the survival states of the user hosts are maintained.

If the topology of the layer 2 multicast network changes, for example, a link is faulty, the layer 2 multicast network needs to be converged so as to forward data packets normally. Conventionally, a method for converging a layer 2 multicast network includes the following: A layer 2 multicast network generates a query command, and multicasts the query command to each user host; after each user host receives the query command, each user host selects a time point at random within a preset time range to multicast a query response that carries channel information to the layer 2 multicast network; after receiving the query response, each device in the layer 2 multicast network stores a forwarding port receiving the query response and the channel information carried by the query response into a layer 2 multicast forwarding table. In this way, convergence of the layer 2 multicast network is implemented.

During the implementation of the present invention, the inventor discovers that the prior art has at least the following problems:

When the topology of the layer 2 multicast network changes, the whole layer 2 multicast network can be converged only after each user host returns a query response. However, each user host selects a time point at random within a preset time range to send a query response. In the worst case, the whole layer 2 multicast network cannot be converged until the preset time range expires. Therefore, the layer 2 multicast network is converged slowly.

### SUMMARY OF THE INVENTION

To speed up the convergence of a layer 2 multicast network, the present invention provides a method and a device for converging the layer 2 multicast network. The technical solution is as follows:

A method for converging a layer 2 multicast network includes: if a device in a layer 2 multicast network detects that a topology of the layer 2 multicast network changes, by the device,
receiving a query command sent by an upstream device, and multicasting the query command to a downstream device;
generating a query response according to a layer 2 multicast forwarding table, where the query response carries channel information requested by a user;
receiving a query response sent by the downstream device, and storing the channel information requested by the user carried by the received query response and a forwarding port receiving the received query response into the layer 2 multicast forwarding table; and
sending the generated query response and the received query response to the upstream device.

A device for converging a layer 2 multicast network includes:
a receiving module, configured to receive a query command sent by an upstream device, and multicast the query command to a downstream device;
a first generating module, configured to generate a query response according to a layer 2 multicast forwarding table, where the query response carries channel information requested by a user;
a storing module, configured to receive a query response sent by the downstream device, and store the channel information requested by the user carried by the received query response and a forwarding port receiving the received query response into the layer 2 multicast forwarding table; and
a sending module, configured to send the generated query response and the received query response to the upstream device.

If any change is detected in the topology of the layer 2 multicast network, when a query command is received, the device in the layer 2 multicast network immediately generates a query response that carries channel information and sends the query response to an upstream device, and multicasts a query command to a downstream device; when receiving the query response, the device in the layer 2 multicast network stores the channel information carried by the query response and a forwarding port receiving the query response. In this way, convergence of the layer 2 multicast network is implemented. Because convergence of the layer 2 multicast network is implemented without the need for waiting for the query response multicasted by a user host, the layer 2 multicast network can be converged faster.

### BRIEF DESCRIPTION OF THE DRAWINGS

To make the technical solution in embodiments of the present invention or in the prior art more clear, the accompanying drawings for illustrating the embodiments of the present invention or the prior art are briefly described below. Apparently, the accompanying drawings described below are only some embodiments of the present invention, and a person having ordinary skill in the art can derive other drawings from such drawings without creative efforts.
FIG. 1 illustrates a network architecture in the prior art;
FIG. 2 is a flowchart of a method for converging a layer 2 multicast network according to a first embodiment of the present invention;
FIG. 3 is a flowchart of a method for converging a layer 2 multicast network according to a second embodiment of the present invention;
FIG. 4 illustrates a network architecture according to a third embodiment of the present invention;
FIG. 5 is a flowchart of a method for converging a layer 2 multicast network according to the third embodiment of the present invention; and
FIG. 6 is a schematic diagram of a device for converging a layer 2 multicast network according to a fourth embodiment of the present invention.

### DETAILED DESCRIPTION OF THE EMBODIMENTS

The following exemplifies the specific implementation process of the present invention with reference to exemplary embodiments. Evidently, the embodiments described below are only parts of the embodiments of the present invention rather than its all embodiments. Based on the embodiments of the present invention, other embodiments obtained by a person having ordinary skill in the art without making any creative effort are all within in the scope of the present invention.

### Embodiment 1

If a device in a layer 2 multicast network detects that a topology of the layer 2 multicast network changes, a method for converging a layer 2 multicast network according to the first embodiment of the present invention is used to converge the layer 2 multicast network. As shown in FIG. 2, the method includes:
Step 101: A device in the layer 2 multicast network receives a query command, and multicasts the query command to a downstream device;
Step 102: Generate a query response according to a layer 2 multicast forwarding table of the device, where the query response carries channel information requested by a user;
Step 103: Receive a query response sent by the downstream device, and store channel information requested by a user carried by the received query response and a forwarding port receiving the received query response into the layer 2 multicast forwarding table;
Step 104: Send the generated query response and the received query response to an upstream device.

In the embodiment of the present invention, if the device in the layer 2 multicast network detects that the topology of the layer 2 multicast network changes, when receiving a query command, the device in the layer 2 multicast network immediately generates a query response that carries channel information and sends the query response to the upstream device, and multicasts the received query command to the downstream device; and when receiving a query response sent by the downstream device, the device stores the channel information carried by the query response and a forwarding port receiving the query response. In this way, convergence of the layer 2 multicast network is implemented. Because the convergence of the layer 2 multicast network is implemented without the need for waiting for the query response multicasted by a user host, the layer 2 multicast network can be converged faster.

### Embodiment 2

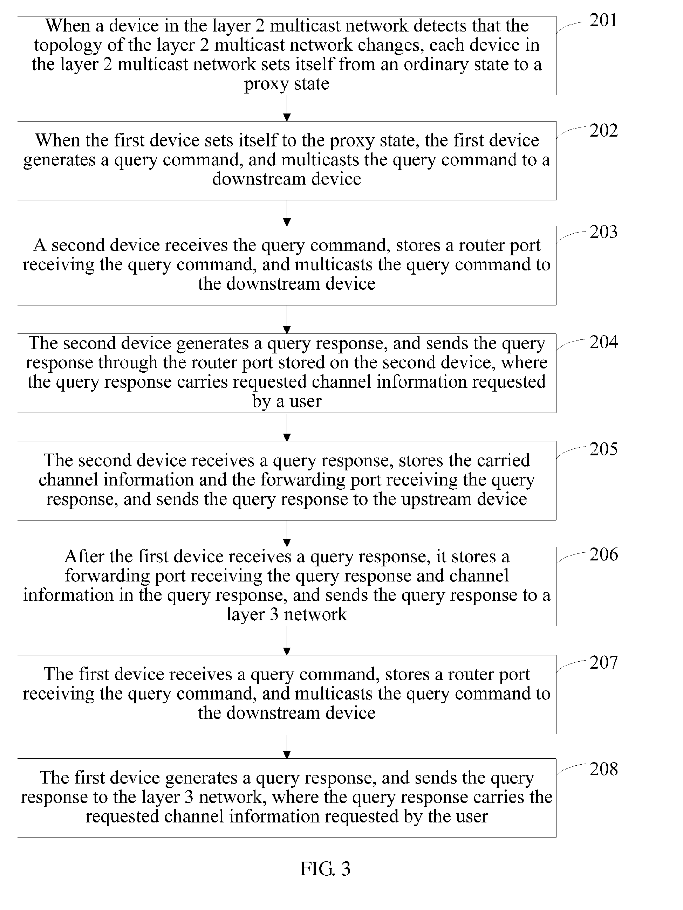

When the topology of a layer 2 multicast network changes, a method for converging a layer 2 multicast network according to an embodiment of the present invention is used to converge the layer 2 multicast network. As shown in FIG. 3, the method includes:
Step 201: When a device in the layer 2 multicast network detects that the topology of the layer 2 multicast network changes, each device in the layer 2 multicast network sets itself from an ordinary state to a proxy state;

Each device in the layer 2 multicast network calculates the topology of the layer 2 multicast network on a real-time basis. Before the topology of the layer 2 multicast network changes, each device in the layer 2 multicast network is in the ordinary state; after each device in the layer 2 multicast network receives a query response in the ordinary state, each device sends the received query response through a router port stored in itself; when receiving a query command, each device multicasts the received query command through a forwarding port stored in itself.

Assuming that a first device and a second device are two devices in the layer 2 multicast network, one or multiple user hosts may be attached to each of the first device and the second device, and the first device is directly connected to a layer 3 network.

Step 202: When the first device connected to the layer 3 network sets itself to the proxy state, the first device generates a query command immediately, and multicasts the generated query command to a downstream device;

Specifically, the first device generates a query command and reads all forwarding ports stored in the first device, multicasts the generated query command to the downstream device through every forwarding port.

The query command generated by the first device in the layer 2 multicast network is the same as the query command multicasted by the layer 3 network. In addition, like the first device, all devices directly connected to the layer 3 network in the layer 2 multicast network set themselves from the ordinary state to the proxy state, then generate a query command, and multicast the query command to the downstream device. Furthermore, the downstream device of the first device may be a user host attached to the first device or may be a device that is located in the layer 2 multicast network and directly connected to the forwarding port of the first device.

Step 203: The second device receives the query command from the upstream device, stores a router port receiving the query command, and multicasts the query command to the downstream device through the forwarding port.

Specifically, when receiving the query command from the upstream device in the layer 2 multicast network, the second device reads a port receiving the query command, uses the port as a router port and stores the router port reads all forwarding ports stored in the second device, and multicasts the received query command to the downstream device through the read forwarding ports.

The downstream device of the second device may be a device that is located in the layer 2 multicast network and directly connected to the forwarding port of the second device or may be a user host attached to the second device.

Like the second device, each device that is located in the layer 2 multicast network and not directly connected to the layer 3 network, after receiving a query command, stores a router port receiving the query command, and multicasts the query command to the downstream device through the forwarding ports stored in each device.

Step 204: After receiving the query command, the second device generates a query response immediately, and sends the generated query response to the upstream device through the router port stored in the second device, where the query response carries channel information requested by a user.

Specifically, after receiving the query command, the second device reads all channel information requested by a user from a layer 2 multicast forwarding table stored in the second device, generates a query response that includes all the read channel information, reads the router port stored in the second device, and sends the generated query response to the upstream device through the read router port.

The upstream device of the second device is a device that is located in the layer 2 multicast network and directly connected to the router port of the second device.

Like the second device, each device that is located in the layer 2 multicast network and not directly connected to the layer 3 network, after receiving a query command, generates a query response immediately, and sends the query response to the upstream device through the router port. In addition, in the ordinary state, the second device will not generate a query response by itself.

After each device on the layer 2 multicast network generates a query response and sends the generated query response to the upstream device through the router port, each device sets itself from the proxy state to the ordinary state respectively.

Each device in the layer 2 multicast network maintains a layer 2 multicast forwarding table, where the layer 2 multicast forwarding table stores a corresponding relation between the channel information requested by the user and the forwarding port.

Step 205: The second device receives a query response sent by the downstream device, where the query response carries channel information requested by a user, stores the carried channel information and a forwarding port receiving the query response into the layer 2 multicast forwarding table, and multicasts the query response to the upstream device.

Specifically, the second device receives a query response from the downstream device, reads the carried channel information from the query response and the port receiving the query response, uses the port as a forwarding port and stores the read channel information and read forwarding port as a new corresponding relation into the layer 2 multicast forwarding table, and sends the query response to the upstream device through its own router port.

When receiving a query command multicasted by the second device, each user host attached to the second device selects a time point at random within a preset time range to multicast a query response to the layer 2 multicast network, where the query response carries the channel information requested by the user.

Like the second device, each device that is located in the layer 2 multicast network and not directly connected to the layer 3 network, when receiving a query response sent by the downstream device, reads the channel information requested by the user from the query response, stores the forwarding port receiving the query response and the read channel information, and sends the query response to the upstream device through its own router port.

No matter whether in the ordinary state or in the proxy state, when receiving a query response, each device in the layer 2 multicast network will store the forwarding port receiving the query response and the channel information carried in the query response as a corresponding relation into the layer 2 multicast forwarding table; if this corresponding relation already exists in the layer 2 multicast forwarding table, the corresponding relation directly overwrites the corresponding relation that already exists in the layer 2 multicast forwarding table. When each device in the layer 2 multicast network stores a corresponding relation into the layer 2 multicast forwarding table of itself, each device will set an aging time for this corresponding relation; when the aging time overflows, each device deletes this corresponding relation from the layer 2 multicast forwarding table. Each time when a corresponding relation is stored into the layer 2 multicast forwarding table, each device will reset an aging time for the corresponding relation, and therefore, to maintain a corresponding relation in the layer 2 multicast forwarding table, each device re-stores this corresponding relation before the aging time of this corresponding relation overflows.

Step 206: After receiving a query response from the downstream device, the first device stores a forwarding port receiving the query response and channel information carried by the query response, and sends the query response to the layer 3 network.

Specifically, after receiving a query response from the downstream device, the first device reads a port receiving the query response, uses the port as a forwarding port, reads the carried channel information from the received query response, stores the channel information and the forwarding port as a corresponding relation into the layer 2 multicast forwarding table, reads the router port stored in the first device, and sends the query response to the layer 3 network through the read router port.

In the layer 2 multicast network, like the first device, the device directly connected to the layer 3 network, after receives the query response, stores the channel information carried by a query response and a forwarding port receiving the query response and sends the query response to the layer 3 network.

When the topology of the layer 2 multicast network changes, the layer 3 network still periodically multicasts the query command to the layer 2 multicast network. In the layer 2 multicast network, when devices directly connected to the layer 3 network receive a query command from the layer 3 network, these devices, like the first device, execute step 207 and step 208.

Step 207: The first device receives the query command from the layer 3 network, stores a router port receiving the query command, and multicasts the query command to the downstream device. Specifically, after receiving a query command from the layer 3 network, the first device reads a port receiving the query command, uses the port as a router port and stores the router port, and multicasts the query command to the downstream device through the forwarding port stored in the first device.

If a device in the ordinary state in the layer 2 multicast network receives a query command again, the device stores the router port receiving the query command, and multicasts the query command through the forwarding port.

Step 208: After receiving the query command, the first device generates a query response immediately, and sends the generated query response to the layer 3 network through the router port stored in the first device, where the query response carries the channel information requested by the user.

Specifically, the first device reads the channel information requested by the user from the layer 2 multicast forwarding table, generates a query response that carries the read channel information, reads the router port stored in the first device, and sends the generated query response to the layer 3 network through the read router port.

After multicasting the generated query response to the layer 3 network, the first device sets itself from the proxy state to the ordinary state.

When each device in the layer 2 multicast network generates a query response and sends the query response, convergence of the layer 2 multicast network is implemented. In this way, after the layer 2 multicast network receives a data packet multicasted by the layer 3 network, each device in the layer 2 multicast network can forward the received data packet to a user host according to the layer 2 multicast forwarding table updated by each device.

In this embodiment, when the first device sets itself from the ordinary state to the proxy state, the first device may not generate a query command but wait for receiving a query command multicasted by the layer 3 network and multicasts the query command to the downstream device, and then the first device generates a query response that carries the channel information, and sends the query response to the layer 3 network. When receiving a query command, the second device multicasts the query command to the downstream device, then generates a query response that carries the channel information, and sends the query response to the upstream device.

In this embodiment, the number of times of generating a query response may be set in each device in the layer 2 multicast network; when each device detects that the topology of the layer 2 multicast network changes, each device sets the initial value of the number of times of generating a query response to 0 respectively. In the proxy state, each time when each device in the layer 2 multicast network generates a query response and multicasts the query response through the router port after receiving a query command, each device adds 1 to the number of times of generating a query response, and judges whether the number of times of generating a query response reaches a preset value; if the number of times of generating a query response reaches a preset value, each device sets itself from the proxy state to the ordinary state, so that the device stops continuing generating a query response. Because the topology of the layer 2 multicast network may continually change, each device is set to generate and send a query response many times. In this way, each device is in the proxy state within a period of time, which can speed up the convergence of the whole layer 2 multicast network.

In this embodiment, both the first device and the second device may be a switch, the query response may be a Report packet, and the query command may be a Query packet.

In the embodiment of the present invention, when each device on the layer 2 multicast network detects that the topology of the layer 2 multicast network changes, each device sets itself to the proxy state; a device directly connected to the layer 3 network immediately generates a query command and multicasts the query command to a downstream device; when a device in the layer 2 multicast network receives the query command, the device immediately generates a query response that carries the channel information and sends the query response; when receiving the query response, each device in the layer 2 multicast network stores channel information carried by the query response and a forwarding port receiving the query response. In this way, each device in the layer 2 multicast network does not need to wait for user hosts to send a query response, which speeds up the convergence of the layer 2 multicast network.

### Embodiment 3

In the network architecture shown in FIG. 1, in the layer 2 multicast network, user hosts 1, 2, and 3 request channels G1, G2, and G3 respectively; the switch B includes router ports port3 and port4, forwarding ports port1 and port2, and the layer 2 multicast forwarding table shown in Table 1; the switch C includes a router port port3, forwarding ports port2 and port1, and the layer 2 multicast forwarding table shown in Table 2; the switch A includes a router port port3, forwarding ports port1 and port2, and the layer 2 multicast forwarding table shown in Table 3.

**Table 1**

| Channel | Forwarding Port |
|---|---|
| G1 | port1 |
| G2 | port2 |

**Table 2**

| Channel | Forwarding Port |
|---|---|
| G1 | port2 |
| G2 | port2 |
| G3 | port1 |

**Table 3**

| Channel | Forwarding Port |
|---|---|
| G1 | port2 |
| G2 | port2 |
| G3 | port2 |

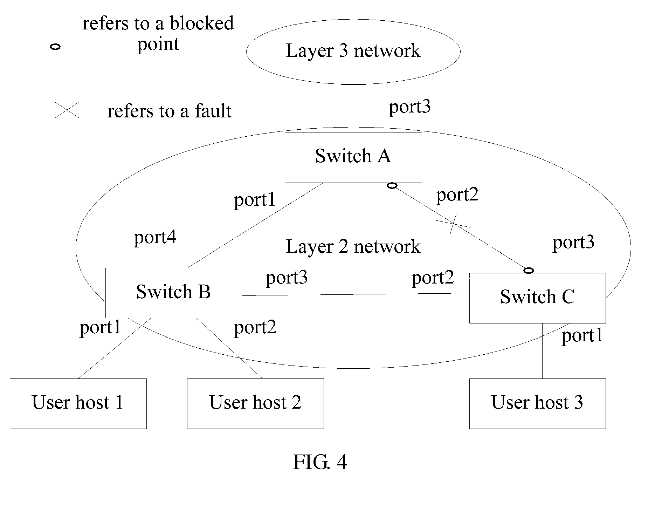

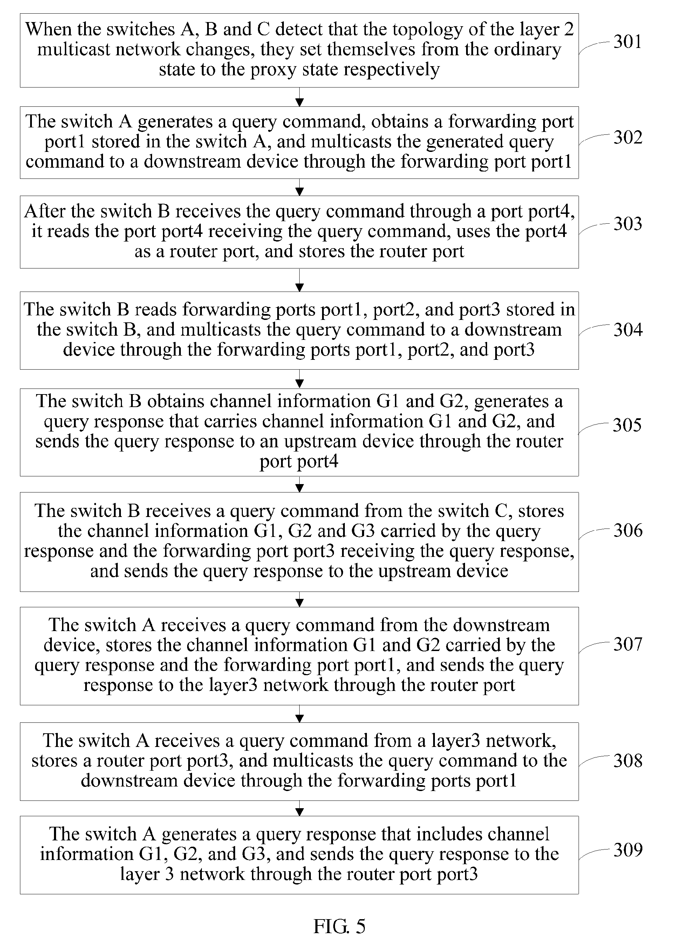

When the topology of the above layer 2 multicast network changes, assuming that the change in the topology of the layer 2 multicast network is: the link between the switch A and the switch C is faulty, while the link between the switch A and the switch B is in conduction, so that the network architecture shown in FIG. 1 is changed to a network architecture shown in FIG. 4, and the above layer 2 multicast network needs to be converged by using the layer 2 multicast network convergence method provided in the embodiment of the present invention. As shown in FIG. 5, the method specifically includes:
Step 301: When switches A, B, and C in a layer 2 multicast network detect that the topology of the layer 2 multicast network changes, they set themselves from the ordinary state to the proxy state.
Step 302: The switch A directly connected to a layer 3 network generates a query command, obtains a forwarding port port1 stored in the switch A, and multicasts the generated query command to a downstream device through the forwarding port port1.

The switch B is a downstream device of the switch A. In addition, because the link between the switch A and the switch C is faulty, the forwarding port port2 of the switch A and the router port port3 of the switch C are unavailable.

Step 303: After receiving the query command from a port port4, the switch B reads the port port4 receiving the query command, uses the port4 as a router port, and stores the router port.

Because the switch B already stores the router port port4, when the switch B re-stores the router port port4 in this step, the stored router port port4 is overwritten.

Step 304: The switch B reads the forwarding ports port1, port2, and port3 stored in the switch B, and multicasts the query command to a downstream device through the forwarding ports port1, port2, and port3.

The downstream device of the switch B includes user hosts 1 and 2 and the switch C; the forwarding ports port1 and port2 are connected to the user host 1 and the user host 2 respectively. Therefore, the user host 1 and the user host 2 will receive the query command. The forwarding port port3 is connected to the switch C, so that the switch C will receive the query command.

When the switch B detects that the link between the switch A and the switch C is faulty and that the switch C changes from an upstream device to a downstream device, the switch B sets the port port3 from a router port to a forwarding port.

Step 305: The switch B obtains channel information G1 and G2, generates a query response that carries channel information G1 and G2, and sends the query response to an upstream device through the router port port4.

Specifically, the switch B reads requested channel information G1 and G2 requested by a user from a layer 2 multicast forwarding table shown in Table 1 stored in the switch B, and generates a query response that carries the channel information G1 and G2, reads the router port port4, and sends the generated query response to the upstream device through the router port port4.

The upstream device of the switch B is the switch A.

After receiving the query command, the switch C executes same operations as those executed by the switch B. However, the query response generated by the switch C includes channel information G1, G2, and G3. After receiving the query command, the user host 1 selects a time point at random within a preset time range to send a query response that carries the channel information G1 to the layer 2 multicast network; after receiving the query command, the user host 2 selects a time point at random within a preset time range to send a query response that carries the channel information G2 to the layer 2 multicast network.

After the switches B and C generate and send a query response, they set themselves from the proxy state to the ordinary state respectively.

Step 306: The switch B receives a query response from the downstream device switch C, stores the channel information G1, G2, and G3 carried by the query response and the forwarding port Port3 receiving the query response, and sends the query response to the upstream device.

Specifically, the switch B receives a query response sent by the switch C through the port port3, reads a port port3, uses the port port3 as a forwarding port, stores the channel information G1, G2, and G3 carried by the query response and the forwarding port port3 into the layer 2 multicast forwarding table, and sends the query response to the upstream device through the router port port4. When receiving a query response from the user host 1 and the user host 2, the switch B executes the same operations. In this case, the layer 2 multicast forwarding table stored in the switch B is shown in Table 4.

**Table 4**

| Channel | Forwarding Port |
|---|---|
| G1 | port1 |
| G2 | port2 |
| G3 | port3 |
| G1 | port3 |
| G2 | port3 |

Step 307: The switch A receives a query response from a downstream device, stores the channel information G1 and G2 carried by the query response and the forwarding port port1, and sends the query response to the layer 3 network through the router port.

Specifically, the switch A receives a query response through the port port1, where the query response carries the channel information G1 and G2, uses the port port1 as a forwarding port, stores the forwarding port port1 and the channel information G1 as a corresponding relation and the forwarding port port1 and the channel information G2 as a corresponding relation into the layer 2 multicast forwarding table, and sends the query response to the layer 3 network through the router port port3.

After receiving a query response again, the switch A operates the received query response in the same manner as the above method, and the maintained layer 2 multicast forwarding table is shown in Table 5.

**Table 5**

| Channel | Forwarding Port |
|---|---|
| G1 | port1 |
| G2 | port1 |
| G3 | port1 |

Because the layer 3 network periodically multicasts a query command to the layer 2 multicast network, the switch A executes the operations in step 308 and step 309 after receiving the query command.

Step 308: The switch A receives a query command from the layer 3 network through the port port3, uses the port3 as a router port, stores the router port port3router port, reads the forwarding port port1 stored in the switch A, and multicasts the query command to the downstream device through the forwarding port port1.

Step 309: The switch A reads the requested channel information G1, G2, and G3 requested by the user from the layer 2 multicast forwarding table shown in Table 5, generates a query response that includes the channel information G1, G2, and G3, and sends the query response to the layer 3 network through the router port port3.

After sending the generated query response to the layer 3 network through the router port port3, the switch A sets itself from the proxy state to the ordinary state.

After the switch B and the switch C receive the query command again, because the switch B and the switch C are already in the ordinary state, the switch B and the switch C store only the router port receiving the query command, and multicast the query command to the downstream device through its own forwarding port.

In the embodiment of the present invention, when each of switches A, B, and C in the layer 2 multicast network detects that the topology of the layer 2 multicast network changes, each switch sets itself to the proxy state; the switch A directly connected to the layer 3 network immediately generates a query command and multicasts the query command to a downstream device; when the switch B and the switch C receive the query command, they immediately generate a query response that carries channel information, and send the query response to the switch A; when the switches A, B, and C receive the query response, they store channel information carried by the query response and a forwarding port receiving the query response. In this way, the layer 2 multicast network does not need to wait for user hosts to multicast a query response, which speeds up the convergence of the layer 2 multicast network.

### Embodiment 4

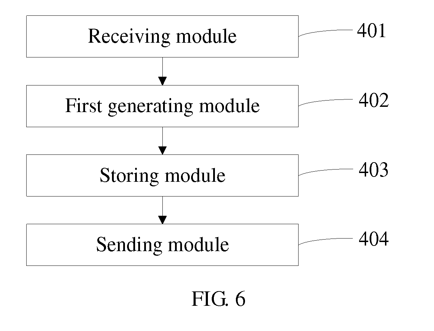

As shown in FIG. 6, the embodiment of the present invention provides a device for converging a layer 2 multicast network, including:
a receiving module 401, configured to receive a query command sent by an upstream device, and multicast the query command to a downstream device;
a first generating module 402, configured to generate a query response according to a layer 2 multicast forwarding table, where the query response carries channel information requested by a user;
a storing module 403, configured to receive a query response sent by the downstream device, and store channel information requested by a user carried by the received query response and a forwarding port receiving the received query response into the layer 2 multicast forwarding table; and
a sending module 404, configured to send the generated query response and the received query response to the upstream device.

When the device is directly connected to a layer 3 network,
the receiving module 401, which is specifically configured to receive a query command multicasted by the layer 3 network, multicast the query command to the downstream device.

Further, the device further includes:
a second generating module, configured to generate a query command, and multicast the generated query command to the downstream device.

When the device is not directly connected to the layer 3 network,
the receiving module 401, which is specifically configured to receive a query command multicasted by the upstream device in the layer 2 network, multicast the received query command to the downstream device.

The first generating module 402 specifically includes:
an obtaining unit, configured to obtain the channel information requested by the user from the layer 2 multicast forwarding table; and
a generating unit, configured to generate a query response that carries the obtained channel information.

Further, the device also includes:
a counting module, configured to: count the number of times of generating a query response, and judge whether the count value reaches a preset value; and if the count value reaches a preset value, stop continuing generating a query response.

The device may be a switch.

In the embodiment of the present invention, if any change is detected in the topology of the layer 2 multicast network, when a query command is received, the device in the layer 2 multicast network immediately generates a query response that carries channel information and sends the query response to an upstream device, and multicasts a query command to a downstream device; when receiving the query response, the device in the layer 2 multicast network stores the channel information carried by the query response and a forwarding port receiving the query response. In this way, convergence of the layer 2 multicast network is implemented. Because convergence of the layer 2 multicast network is implemented without the need for waiting for the query response multicasted by a user host, the layer 2 multicast network can be converged faster.

Through the foregoing embodiments, it is understandable to the skilled person that the embodiments of the present invention may be implemented by software in addition to a necessary hardware platform or by hardware only. However, in most cases, software and a hardware platform are preferred. Based on such understandings, all or part of the contributions to the prior art by the technical solution of the present invention can be embodied by software products. These software products can be used to execute the above methods and processes. The computer software products may be stored in a storage medium, for example, a ROM/RAM, a magnetic disk, a compact disc, etc, and incorporate several instructions to instruct a computer device (for example, a personal computer, a server, or a network device) to execute the method described by each embodiment or some parts of the embodiments of the present invention.

The above descriptions are merely exemplary embodiments of the present invention, but not intended to limit the scope of the present invention. Any modification or replacement that can easily be made without departing from the spirit and principle of the present invention should fall within the scope of the present invention. Therefore, the scope of the present invention is subject to the appended claims.

## Claims

1. A method for converging a layer 2 multicast network, comprising: if a device in a layer 2 multicast network detects that a topology of the layer 2 multicast network changes, by the device,
receiving a query command sent by an upstream device, and multicasting the query command to a downstream device;
generating a query response according to a layer 2 multicast forwarding table of the device, wherein the query response carries channel information requested by a user;
receiving a query response sent by the downstream device, and storing channel information requested by a user carried by the received query response and a forwarding port receiving the received query response into the layer 2 multicast forwarding table; and
sending the generated query response and the received query response to the upstream device.

2. The method according to claim 1, wherein when the device is directly connected to a layer 3 network, the receiving a query command sent by an upstream device and multicasting the query command to a downstream device comprise:
receiving a query command multicasted by the layer 3 network, and multicasting the query command to the downstream device.

3. The method according to claim 2, further comprising:
generating a query command, and multicasting the generated query command to the downstream device.

4. The method according to any one of claims 1 to 3, wherein the generating a query response according to a layer 2 multicast forwarding table comprises:
obtaining the channel information requested by the user from the layer 2 multicast forwarding table; and
generating a query response that carries the obtained channel information.

5. The method according to any one of claims 1 to 4, wherein after generating a query response according to a stored layer 2 multicast forwarding table, the method further comprises:
counting the number of times of generating a query response, and judging whether the count value reaches a preset value; if the count value reaches a preset value, stopping continuing generating a query response.

6. A device for converging a layer 2 multicast network, comprising:
a receiving module, configured to receive a query command sent by an upstream device, and multicast the query command to a downstream device;
a first generating module, configured to generate a query response according to a layer 2 multicast forwarding table, wherein the query response carries channel information requested by a user;
a storing module, configured to receive a query response sent by the downstream device, and store channel information requested by a user carried by the received query response and a forwarding port receiving the received query response into the layer 2 multicast forwarding table; and
a sending module, configured to send the generated query response and the received query response to the upstream device.

7. The device according to claim 6, wherein when the device is directly connected to a layer 3 network,
the receiving module is configured to receive a query command sent by the layer 3 network, and multicast the query command to the downstream device.

8. The device according to claim 7, further comprising:
a second generating module, configured to generate a query command, and multicast the generated query command to the downstream device.

9. The device according to any one of claims 6 to 8, wherein the first generating module comprises:
an obtaining unit, configured to obtain the channel information requested by the user from the layer 2 multicast forwarding table; and
a generating unit, configured to generate a query response that carries the obtained channel information.

10. The device according to any one of claims 6 to 9, further comprising:
a counting module, configured to: count the number of times of generating a query response, and judge whether the count value reaches a preset value; and if the count value reaches a preset value, stop continuing generating a query response.
